# EUROPÄISCHE PATENTSCHRIFT

(11) **EP 3 028 556 B1**
(45) Veröffentlichungstag und Bekanntmachung des Hinweises auf die Patenterteilung: **13.09.2017**
(21) Anmeldenummer: 15194905.4
(22) Anmeldetag: 17.11.2015
(51) Int. Cl.: A01D 34/24, A01B 63/11

(54) **STEUERUNGSSYSTEM UND VERFAHREN ZUM BETREIBEN EINER ERNTEMASCHINE**
CONTROL SYSTEM AND METHOD FOR OPERATING A HARVESTING MACHINE
SYSTÈME DE COMMANDE ET PROCÉDÉ DE FONCTIONNEMENT D'UNE MOISSONNEUSE

(30) Priorität: 01.12.2014 DE 102014117638
(43) Veröffentlichungstag der Anmeldung: 08.06.2016
(73) Patentinhaber: CLAAS Saulgau GmbH, 88348 Bad Saulgau (DE)
(72) Erfinder: Zieglschmid, Markus, 72517 Sigmaringendorf (DE); Ober, Martin, 78736 Epfendorf-Trichtingen (DE)

(56) Entgegenhaltungen:
- EP-A1- 0 092 025
- EP-A2- 0 241 747
- DE-A1- 3 438 353
- DE-A1- 10 234 741

## Beschreibung

Die Erfindung betrifft ein Steuerungssystem zum Betreiben einer Erntemaschine nach dem Oberbegriff des Anspruchs 1. Des Weiteren betrifft die Erfindung ein Verfahren zum Betreiben einer Erntemaschine.

Aus der DE 102 34 741 A1 ist eine als Mähwerksanordnung ausgebildete Erntemaschine mit drei als Mähwerke ausgebildeten Arbeitseinheiten bekannt, nämlich einem Frontmähwerk und zwei Heckmähwerken, wobei das Frontmähwerk vorne an ein Trägerfahrzeug und die beiden Heckmähwerke hinten an das Trägerfahrzeug angekoppelt sind. Die aus diesem Stand der Technik bekannte Mähwerksanordnung dient insbesondere dem Mähen von Gras, wobei nach diesem Stand der Technik entweder jede Mähwerksanordnung einen separaten Schwad auslegt, oder das Mähgut der Mähwerke zu einem gemeinsam Schwad vereinigt wird. Das Frontmähwerk sowie die beiden Heckmähwerke sind dabei derart relativ zueinander am Trägerfahrzeug angebunden, dass zwischen dem Frontmähwerk und jedem der beiden Heckmähwerke jeweils eine definierte Messerüberdeckung ausgebildet ist, und zwar derart, dass einerseits die Gesamtmähbreite der Mähwerke maximal ist, jedoch andererseits vermieden wird, dass im Überlappungsbereich zwischen in der Projektion benachbarten Mähwerken ein nicht gemähter Streifen stehen bleibt.

EP 0 092 025 A1 offenbart einen Ackerschlepper mit einer heck- und frontseitigen Geräteanbauvorrichtung und je einem damit zum Heben und Senken von Arbeitsgeräten gekoppelten hydraulischen Kraftheber, von denen der Heckkraftheber zu seiner Betätigung abhängig sowohl von Mess-, Vergleichs- bzw. Mischwerten aus dem Arbeitswiderstand und der Lage eines Arbeitsgeräts und/oder des Zylinderdruckes als auch einer willkürlichen Einstellung mit Regel-/Steuerelementen verbunden ist und wobei der Frontkraftheber zum willkürlichen Heben bzw. Senken eines Arbeitsgeräts an ein Steuerelement angeschlossen ist, wobei der Frontkraftheber auch für eine Arbeitsweise nach zumindest, einem Teil der Regelungsarten des Heckkrafthebers mit Elementen zu seiner Regelung verbindbar ist und beide Kraftheber gemeinsame Regelelemente und ein gemeinsames Steuerelement aufweisen, an die durch einen Umschalter die Hubzylinder der beiden Kraftheber derart anschließbar sind, dass der eine steuerbar und der andere regelbar bzw. umgekehrt arbeitet.

Aus der Praxis ist es bekannt, dass jedes Mähwerk über Rollen oder Kufen auf dem zu mähenden Untergrund aufliegt, wobei die Auflagekraft der Mähwerke auf dem Untergrund über einen an einem Entlastungzylinder des jeweiligen Mähwerks anliegenden Entlastungsdruck für die Mähwerke eingestellt werden kann. Je höher der Entlastungsdruck für ein Mähwerk ist, desto geringer fällt dessen Auflagekraft auf dem zu mähenden Untergrund aus. Der Entlastungsdruck kann dabei über die Entlastungzylinder der Mähwerke eingestellt werden. Bislang ist es nicht möglich, den Entlastungsdruck am Frontmähwerk einfach und zuverlässig automatisch einzustellen. Vielmehr muss derselbe bislang manuell eingestellt werden.

Hiervon ausgehend liegt der vorliegenden Erfindung die Aufgabe zugrunde, ein neuartiges Steuerungssystem und Verfahren zum Betreiben einer Erntemaschine zu schaffen. Diese Aufgabe wird durch ein Steuerungssystem zum Betreiben einer Erntemaschine nach Anspruch 1 gelöst. Erfindungsgemäß dient die der oder jeder hinteren Arbeitseinheit zugeordnete Hydrauliksteuereinheit auch der automatischen Regelung eines Entlastungsdrucks für die oder jede vordere Arbeitseinheit. Hiermit ist es erstmals möglich, den Entlastungsdruck an der vorderen Arbeitseinheit einfach und zuverlässig automatisch einzustellen.

Vorzugsweise ist der an das Hydrauliksystem des Trägerfahrzeugs koppelbare Hydraulikblock, der Bestandteil der der oder jeder hinteren Arbeitseinheit zugeordneten Hydrauliksteuereinheit ist, an einen Entlastungszylinder der jeweiligen hinteren Arbeitseinheit und weiterhin an einen Entlastungszylinder der jeweiligen vorderen Arbeitseinheit koppelbar. Hiermit ist es möglich, auch den Entlastungsdruck an der vorderen Arbeitseinheit einfach und zuverlässig automatisch einzustellen.

Nach einer vorteilhaften Weiterbildung dient ein Hydraulikdruck des Hydrauliksystems des Trägerfahrzeugs als Eingangsgröße für den Hydraulikblock, der Bestandteil der der oder jeder hinteren Arbeitseinheit zugeordneten Hydrauliksteuereinheit ist, wobei das elektronische Steuergerät, , als Ausgangsgröße des Hydraulikblocks für die oder jede hintere Arbeitseinheit und die oder jede vordere Arbeitseinheit einen individuellen Hydraulikdruck zur Einstellung des jeweiligen Entlastungsdrucks einregelt. Hiermit ist es möglich, auch den Entlastungsdruck an der vorderen Arbeitseinheit einfach und zuverlässig automatisch einzustellen.

Nach einer vorteilhaften Weiterbildung regelt die der oder jeder hinteren Arbeitseinheit zugeordnete Hydrauliksteuereinheit nur dann den Entlastungsdruck für die oder jede vordere Arbeitseinheit, wenn sich die jeweilige vordere Arbeitseinheit in abgesenkter Schwimmstellung befindet. Hiermit ist es möglich, den Entlastungsdruck an der vorderen Arbeitseinheit einfach und zuverlässig automatisch einzustellen.

Vorzugsweise leitet das elektronische Steuergerät der Hydrauliksteuereinheit, die der oder jeder hinteren Arbeitseinheit zugeordnet ist, aus ISOBUS-Signalen des Trägerfahrzeugs ab, ob sich die jeweilige vordere Arbeitseinheit in abgesenkter Schwimmstellung befindet. Zusätzlich oder alternativ vergleicht das elektronische Steuergerät der Hydrauliksteuereinheit, die der oder jeder hinteren Arbeitseinheit zugeordnet ist, zyklisch den aktuellen Entlastungsdruck der jeweiligen vorderen Arbeitseinheit und mit einem vorherigen Entlastungsdruck der jeweiligen vorderen Arbeitseinheit und ermittelt abhängig von diesem Vergleich, ob sich die jeweilige vordere Arbeitseinheit in abgesenkter Schwimmstellung befindet. Hiermit ist es möglich, den Entlastungsdruck an der vorderen Arbeitseinheit einfach und zuverlässig automatisch einzustellen.

Das erfindungsgemäße Verfahren ist Anspruch 7 definiert.

Bevorzugte Weiterbildungen der Erfindung ergeben sich aus den Unteransprüchen und der Beschreibung. Ausführungsbeispiele der Erfindung werden, ohne hierauf beschränkt zu sein, an Hand der Zeichnung näher erläutert. Dabei zeigt:

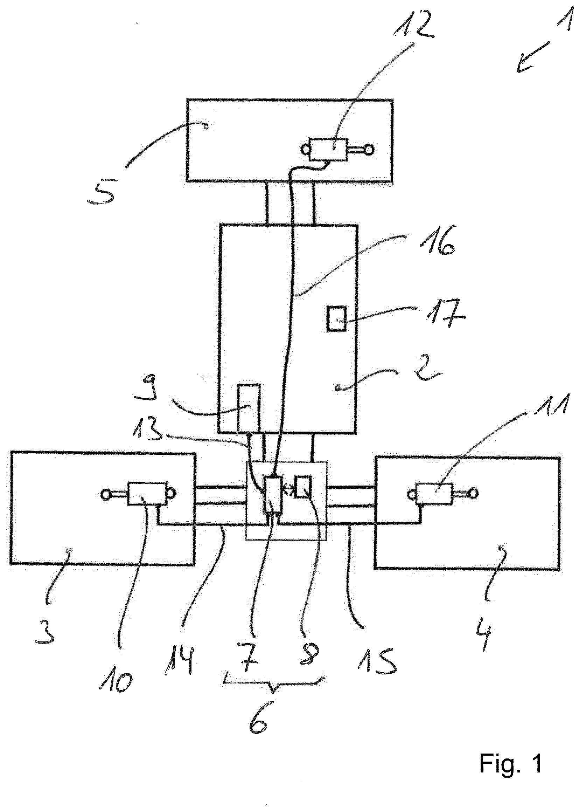

- Fig. 1: ein Blockschaltbild einer Erntemaschine, die ein Zugfahrzeug, zwei hintere Arbeitseinheiten und eine vordere Arbeitseinheit umfasst.

Die hier vorliegende Erfindung betrifft ein Steuerungssystem für eine Erntemaschine und ein Verfahren zum Betreiben derselben.

Nachfolgend wird die Erfindung an Hand einer als Mähwerksanordnung ausgebildeten Erntemaschine beschreiben. Die Erfindung ist jedoch nicht auf diesen Anwendungsfall beschränkt. Vielmehr kann die Erfindung auch bei anderen Erntemaschinen zu Einsatz kommen.

Fig. 1 zeigt ein Blockschaltbild einer Mähwerksanordnung 1, wobei die Mähwerksanordnung 1 ein Trägerfahrzeug 2 aufweist. An das Trägerfahrzeug 2 sind zwei als Heckmähwerke 3 und 4 ausgebildete hintere Arbeitseinheiten und eine als Frontmähwerk 5 ausgebildete vordere Arbeitseinheit gekoppelt.

Den beiden Heckmähwerken 3 und 4 ist eine Hydrauliksteuereinheit 6 zugeordnet. Die Hydrauliksteuereinheit 6 ist an ein Hydrauliksystem 9 des Trägerfahrzeugs 2 koppelbar. So umfasst die Hydrauliksteuereinheit 6 einen Hydraulikblock 7 und ein elektronisches Steuergerät 8, wobei der Hydraulikblock 7 über Hydraulikleitungen 13, nämlich eine Vorlaufleitung und eine Rücklaufleitung, an das Hydrauliksystem 9 des Trägerfahrzeugs2 koppelbar ist, und wobei das elektronische Steuergerät 8 der automatischen Regelung des Entlastungsdrucks für die Heckmähwerke 3 und 4 dient. Hierzu ist der Hydraulikblock 7 über weitere Hydraulikleitungen 14, 15 an den Heckmähwerken 3, 4 zugordnete Entlastungszylinder 10, 11 koppelbar.

Erfindungsgemäß dient die den Heckmähwerken 3, 4 zugeordnete Hydrauliksteuereinheit 6 auch der automatischen Regelung eines Entlastungsdrucks für das Frontmähwerk 5. Die den beiden Heckmähwerken 3 und 4 zugeordnete Hydrauliksteuereinheit 6 übernimmt demnach erfindungsgemäß eine weitere Funktion, nämlich die der Regelung des Entlastungsdrucks für das Frontmähwerk 5. Der an das Hydrauliksystem 9 des Trägerfahrzeugs 2 koppelbare Hydraulikblock 7 der den beiden Heckmähwerken 3 und 4 zugeordneten Hydrauliksteuereinheit 6 ist hierzu weiterhin an einen Entlastungszylinder 12 des Frontmähwerks 5 koppelbar, nämlich über eine Hydraulikleitung 16.

Ein Hydraulikdruck des Hydrauliksystems 9 des Trägerfahrzeugs 2 dient dem Hydraulikblock 7 der Hydrauliksteuereinheit 6 als Eingangsgröße. Eine Schnittstelle des Hydrauliksystems 9 des Trägerfahrzeugs 2, an die der Hydraulikblock 7 der Hydrauliksteuereinheit 6 koppelbar ist, wird auch als Load-Sensing-Anschluss des Trägerfahrzeugs 2 bezeichnet. Das elektronische Steuergerät 8 der Hydrauliksteuereinheit 6 regelt den Hydraulikblock 7 derart, dass derselbe für die Heckmähwerke 3, 4 und das Frontmähwerks 5 jeweils einen individuellen, geregelten Hydraulikdruck zur Einstellung des jeweiligen, individuellen Entlastungsdrucks als geregelte Ausgangsgröße bereitstellt.

Sollwerte für diese automatische Regelung, also ein Sollwert für den Entlastungsdruck der Heckmähwerke 3, 4 und ein Sollwert für den Entlastungsdruck des Frontmähwerks 5, sind an einem Bedienterminal 17 des Trägerfahrzeugs 2 eingebbar.

Die automatische Regelung, also die Führung des entsprechenden Istwerts des Entlastungsdrucks auf den entsprechenden Sollwert, erfolgt automatisch für alle Mähwerke 3, 4, 5 über das elektronische Steuergerät 8 der Hydrauliksteuereinheit 6, die den Heckmähwerken 3, 4 zugeordnet ist. Der entsprechende Istwert des Entlastungsdrucks kann mit Hilfe eines entsprechenden Sensors erfasst werden.

Nach einer vorteilhaften Weiterbildung der Erfindung regelt die den Heckmähwerken 3, 4 zugeordnete Hydrauliksteuereinheit 6 nur dann den Entlastungsdruck für das Frontmähwerk 5, wenn sich das Frontmähwerks 5 in einer auf den zu mähenden Untergrund abgesenkten Schwimmstellung befindet.

Dabei kann vorgesehen sein, dass das elektronische Steuergerät 8 der Hydrauliksteuereinheit 6, die den Heckmähwerken 3, 4 zugeordnet ist, aus mindestens einem ISOBUS-Signal des Trägerfahrzeugs 2 ableitet, ob sich das Frontmähwerk 5 in der auf den zu mähenden Untergrund abgesenkter Schwimmstellung befindet.

Alternativ, insbesondere dann, wenn ein entsprechendes ISOBUS-Signale des Trägerfahrzeugs 2 nicht zur Verfügung steht, oder zusätzlich, insbesondere zur Verifizierung des entsprechenden ISOBUS-Signals, vergleicht das elektronische Steuergerät 8 der Hydrauliksteuereinheit 6, die den Heckmähwerken 3, 4 zugeordnet ist, zyklisch den aktuellen Entlastungsdruck des Frontmähwerks 5 mit einem vorherigen Entlastungsdruck des Frontmähwerks 5 und ermittelt abhängig von diesem Vergleich, ob sich das Frontmähwerk 5 in der auf den zu mähenden Untergrund abgesenkten Schwimmstellung befindet.

So ist es z.B. möglich, dass in regelmäßigen zeitlichen Abständen der Entlastungsdruck des Frontmähwerkes 5 gemessen und temporär gespeichert wird. In jedem Messzyklus wird der vorherige Entlastungsdruck mit dem aktuellen Entlastungsdruck verglichen.

Ist der aktuelle Entlastungsdruck des Frontmähwerkes 5 um einen definierten Grenzwert höher als der vorherige Entlastungsdruck, dann wird angenommen, dass das Frontmähwerk 5 auf den Boden in die Schwimmstellung abgesenkt ist und die Entlastungsdruckregelung durchgeführt werden kann.

Ist der aktuelle Entlastungsdruck des Frontmähwerkes 5 jedoch um einen definierten Grenzwert geringer als der vorherige Entlastungsdruck, dann wird angenommen, dass das Frontmähwerk 5 in eine Vorgewendestellung angehoben und demnach aus der Entlastungsdruck herausgehoben wurde, sofern während des letzten Messzyklus der Entlastungsdruck nicht durch den Entlastungsdruckregler des elektronischen Steuergeräts 8 der Hydrauliksteuereinheit 6 selbst verringert wurde. In diesem Fall wird der Entlastungsdruckregler des elektronischen Steuergeräts 8 für das Frontmähwerk 5 vorzugsweise deaktiviert.

Sofern für das Ausheben des Frontmähwerks 5 wenigstens ein separater Hydraulikzylinder vorgesehen ist, dann kann alternativ oder zusätzlich ein Sensor vorgesehen werden, der das Anheben des Frontmähwerks detektiert. Sobald der Sensor feststellt, dass das Frontmähwerk ausgehoben - d.h. vom Untergrund abgehoben - wurde, wird der Entlastungsdruckregler des Steuergeräts 8 für das Frontmähwerk 5 vorzugsweise deaktiviert.

Als Sensor kann beispielsweise ein Drucksensor vorgesehen werden, der den Öldruck des Aushebe-Hydraulikzylinders aufnimmt.

### Bezugszeichenliste

- 1: Erntemaschine
- 2: Trägerfahrzeug
- 3: Arbeitseinheit
- 4: Arbeitseinheit
- 5: Arbeitseinheit
- 6: Hydrauliksteuereinheit
- 7: Hydraulikblock
- 8: Steuergerät
- 9: Hydrauliksystem
- 10: Entlastungszylinder
- 11: Entlastungszylinder
- 12: Entlastungszylinder
- 13: Hydraulikleitung
- 14: Hydraulikleitung
- 15: Hydraulikleitung
- 16: Hydraulikleitung
- 17: Bedienterminal

## Patentansprüche

1. Steuerungssystem zum Betreiben einer Erntemaschine (1), wobei die Erntemaschine (1) ein Zugfahrzeug (2) und zumindest zwei an das Zugfahrzeug (2) gekoppelte Arbeitseinheiten (3, 4, 5) aufweist, nämlich mindestens eine in Fortbewegungsrichtung der Erntemaschine (1) gesehen hintere Arbeitseinheit (3, 4) und mindestens eine in Fortbewegungsrichtung der Erntemaschine (1) gesehen vordere Arbeitseinheit (5), mit einer der oder jeder hinteren Arbeitseinheit (3, 4) zugeordneten Hydrauliksteuereinheit (6), die einen an ein Hydrauliksystem (9) des Trägerfahrzeugs (2) koppelbaren Hydraulikblock (7) und ein elektronisches Steuergerät (8) aufweist und die der Regelung eines Entlastungsdrucks für die oder jede hintere Arbeitseinheit (3, 4) dient, **dadurch gekennzeichnet, dass** die der oder jeder hinteren Arbeitseinheit (3, 4) zugeordneten Hydrauliksteuereinheit (6) auch der automatischen Regelung eines Entlastungsdrucks für die oder jede vordere Arbeitseinheit (5) dient.

2. Steuerungssystem nach Anspruch 1, **dadurch gekennzeichnet, dass** der an das Hydrauliksystem (9) des Trägerfahrzeugs (2) koppelbare Hydraulikblock (7) an einen Entlastungszylinder (10, 11) der jeweiligen hinteren Arbeitseinheit (3, 4) und an einen Entlastungszylinder (12) der jeweiligen vordere Arbeitseinheit (3, 4) koppelbar ist.

3. Steuerungssystem nach Anspruch 1 oder 2, **dadurch gekennzeichnet, dass** ein Hydraulikdruck des Hydrauliksystems (9) des Trägerfahrzeugs (2) eine Eingangsgröße des Hydraulikblocks (7) ist, und dass das elektronische Steuergerät (8) als Ausgangsgrößen des Hydraulikblocks (7) für die oder jede hintere Arbeitseinheit (3, 4) und die oder jede vordere Arbeitseinheit (5) einen individuellen Hydraulikdruck zur Einstellung des jeweiligen Entlastungsdrucks automatisch regelt.

4. Steuerungssystem nach einem der Ansprüche 1 bis 3, **dadurch gekennzeichnet, dass** die der oder jeder hinteren Arbeitseinheit (3, 4) zugeordnete Hydrauliksteuereinheit (6) nur dann den Entlastungsdruck für die oder jede vordere Arbeitseinheit (5) regelt, wenn sich die jeweilige vordere Arbeitseinheit (5) in abgesenkter Schwimmstellung befindet.

5. Steuerungssystem nach Anspruch 4, **dadurch gekennzeichnet, dass** das elektronische Steuergerät (8) der Hydrauliksteuereinheit (6), die der oder jeder hinteren Arbeitseinheit (3, 4) zugeordnet ist, aus mindestens einem ISOBUS-Signal des Trägerfahrzeugs (2) ableitet, ob sich die jeweilige vordere Arbeitseinheit (5) in abgesenkter Schwimmstellung befindet.

6. Steuerungssystem nach Anspruch 4 oder 5, **dadurch gekennzeichnet, dass** das elektronische Steuergerät (8) der Hydrauliksteuereinheit (6), die der oder jeder hinteren Arbeitseinheit (3, 4) zugeordnet ist, zyklisch den Entlastungsdruck der jeweiligen vorderen Arbeitseinheit (5) und mit einem vorherigen Entlastungsdruck der jeweiligen vorderen Arbeitseinheit (5) vergleicht und abhängig von diesem Vergleich ermittelt, ob sich die jeweilige vordere Arbeitseinheit (5) in abgesenkter Schwimmstellung befindet.

7. Steuerungssystem nach einem der Ansprüche 4 bis 6, **dadurch gekennzeichnet, dass** für das Ausheben der jeweiligen vorderen Arbeitseinheit (5) wenigstens ein separater Hydraulikzylinder vorgesehen ist und zur Erkennung des Aushebens der jeweiligen vorderen Arbeitseinheit (5) ein Sensor vorgesehen ist.

8. Verfahren zum Betreiben einer Erntemaschine (1), wobei die Erntemaschine (1) ein Zugfahrzeug (2) und zumindest zwei an das Zugfahrzeug (2) gekoppelte Arbeitseinheiten (3, 4, 5) aufweist, nämlich mindestens eine in Fortbewegungsrichtung der Erntemaschine (1) gesehen hintere Arbeitseinheit (3, 4) und mindestens eine in Fortbewegungsrichtung der Erntemaschine (1) gesehen vordere Arbeitseinheit (5), und wobei eine der oder jeder hinteren Arbeitseinheit (3, 4) zugeordnete Hydrauliksteuereinheit (6), die einen an ein Hydrauliksystem (9) des Trägerfahrzeugs (2) koppelbaren Hydraulikblock (7) und ein elektronisches Steuergerät (8) aufweist, einen Entlastungsdruck für die oder jede hintere Arbeitseinheit (3, 4) regelt, **dadurch gekennzeichnet, dass** die der oder jeder hinteren Arbeitseinheit (3, 4) zugeordnete Hydrauliksteuereinheit (6) auch einen Entlastungsdruck für die oder jede vordere Arbeitseinheit (5) automatisch regelt.

9. Verfahren nach Anspruch 8, **dadurch gekennzeichnet, dass** die der oder jeder hinteren Arbeitseinheit (3, 4) zugeordnete Hydrauliksteuereinheit (6) nur dann den Entlastungsdruck für die oder jede vordere Arbeitseinheit (5) regelt, wenn sich die jeweilige vordere Arbeitseinheit (5) in abgesenkter Schwimmstellung befindet.

10. Verfahren nach Anspruch 9, **dadurch gekennzeichnet, dass** das elektronische Steuergerät (8) der Hydrauliksteuereinheit (6), die der oder jeder hinteren Arbeitseinheit (3, 4) zugeordnet ist, aus mindestens einem ISOBUS-Signal des Trägerfahrzeugs (2) ableitet, ob sich die jeweilige vordere Arbeitseinheit (5) in abgesenkter Schwimmstellung befindet.

11. Verfahren nach Anspruch 9 oder 10, **dadurch gekennzeichnet, dass** das elektronische Steuergerät (8) der Hydrauliksteuereinheit (6), die der oder jeder hinteren Arbeitseinheit (3, 4) zugeordnet ist, zyklisch den Entlastungsdruck der jeweiligen vorderen Arbeitseinheit (5) und mit einem vorherigen Entlastungsdruck der jeweiligen vorderen Arbeitseinheit (5) vergleicht und abhängig von diesem Vergleich ermittelt, ob sich die jeweilige vordere Arbeitseinheit (5) in abgesenkter Schwimmstellung befindet.

## Claims

1. A control system for operating a harvester (1), wherein the harvester (1) has a tractor vehicle (2) and at least two working units (3, 4, 5) coupled to the tractor vehicle (2), namely at least one rear working unit (3, 4) as viewed in the direction of travel of the harvester (1) and at least one front working unit (5) as viewed in the direction of travel of the harvester (1), with a hydraulic control unit (6) which is associated with the or each rear working unit (3, 4) and which has a hydraulic block (7) that can be coupled to a hydraulic system (9) of the carrier vehicle (2) and an electronic control device (9) and which serves for regulation of a relief pressure for the or each rear working unit (3, 4), **characterised in that** the hydraulic control unit (6) associated with the or each rear working unit (3, 4) also serves for automatic closed-loop control of a relief pressure for the or each front working unit (5).

2. A control system according to claim 1 **characterised in that** the hydraulic block (7) which can be coupled to the hydraulic system (9) of the carrier vehicle (2) can be coupled to a relief cylinder (10, 11) of the respective rear working unit (3, 4) and to a relief cylinder (12) of the respective front working unit (3, 4).

3. A control system according to claim 1 or claim 2 **characterised in that** a hydraulic pressure of the hydraulic system (9) of the carrier vehicle (2) is an input parameter of the hydraulic block (7) and that the electronic control device (8) as output parameters of the hydraulic block (7) for the or each rear working unit (3, 4) and the or each front working unit (5) automatically provides for closed-loop control of an individual hydraulic pressure for adjusting the respective relief pressure.

4. A control system according to one of claims 1 to 3 **characterised in that** the hydraulic control unit (6) associated with the or each rear working unit (3, 4) provides for closed-loop control for the relief pressure for the or each front working unit (5) only when the respective front working unit (5) is in the lowered float position.

5. A control system according to claim 4 **characterised in that** the electronic control device (8) of the hydraulic control unit (6) which is associated with the or each rear working unit (3, 4) deduces from at least one ISOBUS signal of the carrier vehicle (2) whether the respective front working unit (5) is in the lowered float position.

6. A control system according to claim 4 or claim 5 **characterised in that** the electronic control device (8) of the hydraulic control unit (6) which is associated with the or each rear working unit (3, 4) cyclically compares the relief pressure of the respective front working unit (5) to a previous relief pressure of the respective front working unit (5) and in dependence on said comparison ascertains whether the respective front working unit (5) is in the lowered float position.

7. A control system according to one of claims 4 to 6 **characterised in that** at least one separate hydraulic cylinder is provided for lifting the respective front working unit (5) and a sensor is provided for detecting lifting of the respective front working unit (5).

8. A method of operating a harvester (1), wherein the harvester (1) has a tractor vehicle (2) and at least two working units (3, 4, 5) coupled to the tractor vehicle (2), namely at least one rear working unit (3, 4) viewed in the direction of travel of the harvester (1) and at least one front working unit (5) viewed in the direction of travel of the harvester (1), and wherein a hydraulic control unit (6) associated with the or each rear working unit (3, 4) and having a hydraulic block (7) which can be coupled to a hydraulic system (9) of the carrier vehicle (2) and an electronic control device (8) provides for closed-loop control of a relief pressure for the or each rear working unit (3, 4), **characterised in that** the hydraulic control unit (8) associated with the or each rear working unit (3, 4) also provides for automatic closed-loop control of a relief pressure for the or each front working unit (5).

9. A method according to claim 8 **characterised in that** the hydraulic control unit (6) associated with the or each rear working unit (3, 4) provides for closed-loop control of the relief pressure for the or each front working unit (5) only when the respective front working unit (5) is in the lowered float position.

10. A method according to claim 9 **characterised in that** the electronic control device (8) of the hydraulic control unit (6) which is associated with the or each rear working unit (3, 4) deduces from at least one ISOBUS signal of the carrier vehicle (2) whether the respective front working unit (5) is in the lowered float position.

11. A method according to claim 9 or claim 10 **characterised in that** the electronic control device (8) of the hydraulic control unit (6) which is associated with the or each rear working unit (3, 4) cyclically compares the relief pressure of the respective front working unit (5) to a previous relief pressure of the respective front working unit (5) and in dependence on said comparison ascertains whether the respective front working unit (5) is in the lowered float position.

## Revendications

1. Système de commande pour exploiter une machine de récolte (1), la machine de récolte (1) comportant un véhicule de traction (2) et au moins deux unités de travail (3, 4, 5) couplées au véhicule de traction (2), à savoir au moins une unité de travail (3, 4) arrière par rapport à la direction d'avance de la machine de récolte (1) et au moins une unité de travail (5) avant par rapport à la direction d'avance de la machine de récolte (1), une unité de commande hydraulique (6) qui est associée à une ou à chaque unité de travail arrière (3, 4) et qui comporte un bloc hydraulique (7) couplable à un système hydraulique (9) du véhicule porteur (2) et un appareil de commande électronique (8) et sert à réguler la pression de décharge pour la ou chaque unité de travail arrière (3, 4), **caractérisé en ce que** l'unité de commande hydraulique (6) associée à la ou à chaque unité de travail arrière (3, 4) sert également à la régulation automatique d'une pression de décharge pour la ou chaque unité de travail avant (5).

2. Système de commande selon la revendication 1, **caractérisé en ce que** le bloc hydraulique (7) couplable au système hydraulique (9) du véhicule porteur (2) est couplable à un vérin de décharge (10, 11) de l'unité de commande hydraulique arrière (3, 4) respective et à un vérin de décharge (12) de l'unité de commande hydraulique avant (3, 4) respective.

3. Système de commande selon la revendication 1 ou 2, **caractérisé en ce qu'**une pression hydraulique du système hydraulique (9) du véhicule porteur (2) est une grandeur d'entrée du bloc hydraulique (7), et **en ce que**, comme grandeurs de sortie du bloc hydraulique (7) pour la ou chaque unité de travail arrière (3, 4) ou pour la ou chaque unité de travail avant (5), l'appareil de commande électronique (8) régule automatiquement une pression hydraulique individuelle pour ajuster la pression de décharge respective.

4. Système de commande selon une des revendications 1 à 3, **caractérisé en ce que** l'unité de commande hydraulique (6) associée à la ou à chaque unité de travail arrière (3, 4) ne régule la pression de décharge pour la ou chaque unité de travail avant (5) que lorsque l'unité de commande hydraulique avant (5) respective se trouve en position flottante abaissée.

5. Système de commande selon la revendication 4, **caractérisé en ce que** l'appareil de commande électronique (8) de l'unité de commande hydraulique (6) associée à la ou à chaque unité de travail arrière (3, 4) déduit d'au moins un signal ISOBUS du véhicule porteur (2) si l'unité de commande hydraulique avant (5) respective se trouve en position flottante abaissée.

6. Système de commande selon la revendication 4 ou 5, **caractérisé en ce que** l'appareil de commande électronique (8) de l'unité de commande hydraulique (6) associée à la ou à chaque unité de travail arrière (3, 4) compare cycliquement la pression de décharge de l'unité de commande hydraulique avant (5) respective avec une pression de décharge antérieure de l'unité de commande hydraulique avant (5) respective et, en fonction de cette comparaison, détermine si l'unité de commande hydraulique avant (5) respective se trouve en position flottante abaissée.

7. Système de commande selon une des revendications 4 à 6, **caractérisé en ce que**, pour lever l'unité de commande hydraulique avant (5) respective, il est prévu au moins un vérin hydraulique séparé et, pour détecter le levage de l'unité de commande hydraulique avant (5) respective, il est prévu un capteur.

8. Procédé pour exploiter une machine de récolte (1), la machine de récolte (1) comportant un véhicule de traction (2) et au moins deux unités de travail (3, 4, 5) couplées au véhicule de traction (2), à savoir au moins une unité de travail (3, 4) arrière par rapport à la direction d'avance de la machine de récolte (1) et au moins une unité de travail (5) avant par rapport à la direction d'avance de la machine de récolte (1), et une unité de commande hydraulique (6), qui est associée à une ou à chaque unité de travail arrière (3, 4) et qui comporte un bloc hydraulique (7) couplable à un système hydraulique (9) du véhicule porteur (2) et un appareil de commande électronique (8), régulant une pression de décharge pour la ou chaque unité de travail arrière (3, 4), **caractérisé en ce que** l'unité de commande hydraulique (6) associée à la ou à chaque unité de travail arrière (3, 4) régule aussi automatiquement une pression de décharge pour la ou chaque unité de travail avant (5).

9. Procédé selon la revendication 8, **caractérisé en ce que** l'unité de commande hydraulique (6) associée à la ou à chaque unité de travail arrière (3, 4) ne régule la pression de décharge pour la ou chaque unité de travail avant (5) que lorsque l'unité de commande hydraulique avant (5) respective se trouve en position flottante abaissée.

10. Procédé selon la revendication 9, **caractérisé en ce que** l'appareil de commande électronique (8) de l'unité de commande hydraulique (6) associée à la ou à chaque unité de travail arrière (3, 4) déduit d'au moins un signal ISOBUS du véhicule porteur (2) si l'unité de commande hydraulique avant (5) respective se trouve en position flottante abaissée.

11. Procédé selon la revendication 9 ou 10, **caractérisé en ce que** l'appareil de commande électronique (8) de l'unité de commande hydraulique (6) associée à la ou à chaque unité de travail arrière (3, 4) compare cycliquement la pression de décharge de l'unité de commande hydraulique avant (5) respective avec une pression de décharge antérieure de l'unité de commande hydraulique avant (5) respective et, en fonction de cette comparaison, détermine si l'unité de commande hydraulique avant (5) respective se trouve en position flottante abaissée.
